# EUROPEAN PATENT APPLICATION

(11) **EP 4 521 220 A1**
(43) Date of publication of application: **12.03.2025**
(21) Application number: 23910104.1
(22) Date of filing: 12.12.2023
(51) Int. Cl.: G06F 3/0482

(54) **VIRTUAL RESOURCE OBJECT-BASED INTERACTION METHOD AND APPARATUS , DEVICE, AND STORAGE MEDIUM**

(30) Priority: 26.12.2022 CN 202211679758
(71) Applicant: Beijing Zitiao Network Technology Co., Ltd., Beijing 100190 (CN)
(72) Inventor: QIN, Tong, Beijing 100028 (CN); HE, Bibo, Beijing 100028 (CN); LIANG, Zhihai, Beijing 100028 (CN); WANG, Yuxi, Beijing 100028 (CN); ZHANG, Yongjian, Beijing 100028 (CN)
(74) Representative: Williams, Michael David
(86) International application number: PCT/CN2023/138176
(87) International publication number: WO 2024/140174

(57) **Abstract**

The present disclosure provides a virtual resource object-based interaction method and apparatus, a device, and a storage medium. The method comprises: first, in response to a preset interaction trigger operation, acquiring current position information and current time information; uploading, to a target server, an interaction processing request carrying the current position information and the current time information; and then receiving a target virtual resource object issued by the target server, and executing a target interaction function on the basis of the target virtual resource object.

## Description

### TECHNICAL FIELD

The present disclosure relates to the field of data processing, and in particular a virtual resource object-based interaction method, apparatus, and device, and a storage medium.

### BACKGROUND

Virtual resource object refers to an object created in the physical display screen or virtual space by computer 2D technology drawing or 3D modeling technology construction, which can include a person image, a person animation, a virtual person image, a virtual 2D scene, a virtual 3D scene, and etc.

With the continuous development of interaction technologies of virtual resource objects, the virtual resource object-based interactive functions are becoming more and more popular in various types of application software. Therefore, how to enrich the virtual resource object-based interactive functions so as to improve the interactive experience of users for the virtual resource objects is an urgent technical problem to be solved at present.

### SUMMARY

In order to solve the above-mentioned technical problem, an embodiment of the present disclosure provides a virtual resource object-based interaction method.

According to a first aspect, the present disclosure provides a virtual resource object-based interaction method, which comprises:
in response to a preset interaction trigger operation, obtaining current position information and current time information;
uploading, to a target server, an interaction processing request carrying the current position information and the current time information; wherein, the interaction processing request is used for requesting the target server to determine a target virtual resource object, which is a virtual resource object corresponding to historical event information determined based on the current position information and the current time information;
receiving the target virtual resource object sent by the target server, and executing a target interactive function based on the target virtual resource object.

In one optional implementation, the executing the target interactive function based on the target virtual resource object comprises:
presenting the target virtual resource object on a video acquisition page;
generating a first multimedia resource based on the target virtual resource object; wherein the target virtual resource object is presented in the first multimedia resource.

In one optional implementation, the generating a first multimedia resource based on the target virtual resource object comprises:
in response to a trigger operation for an album entry on the video acquisition page, jumping from the video acquisition page to a user material page; wherein at least one user material is presented on the user material page;
in response to a selection operation for a target user material among the at least one user material, applying the target virtual resource object to the target user material to obtain the first multimedia resource.

In one optional implementation, the generating a first multimedia resource based on the target virtual resource object comprises:
in response to a shooting trigger operation acting on the video acquisition page, shooting the first multimedia resource based on the target virtual resource object.

In one optional implementation, the target virtual resource object comprises at least one of a person image, a person animation and a virtual character; the shooting the first multimedia resource based on the target virtual resource object in response to the shooting trigger operation acting on the video acquisition page comprises:
in response to the shooting trigger operation acting on the video acquisition page, acquiring actions of a target object in a shooting image, and controlling the target virtual resource object to execute the actions of the target object in the shooting image, so as to obtain the first multimedia resource.

In one optional implementation, the target virtual resource object carries preset action information, and the target virtual resource object comprises at least one of a person image, a person animation and a virtual character; the shooting the first multimedia resource based on the target virtual resource object in response to a shooting trigger operation acting on the video acquisition page comprises:
in response to the shooting trigger operation acting on the video acquisition page, controlling the target virtual resource object to execute the actions according to the preset action information, so as to obtain the first multimedia resource.

According to a second aspect, the present disclosure provides a virtual resource object-based interaction method, which comprises:
receiving an interaction processing request from a client; wherein the interaction processing request carries current position information and current time information;
determining corresponding historical event information based on the current position information and the current time information; wherein the historical event information comprises person information and/or event descriptive information of a historical event;
determining a virtual resource object corresponding to the historical event information as a target virtual resource object, and sending the target virtual resource object to the client.

In one optional implementation, the determining corresponding historical event information based on the current position information and the current time information comprises:
obtaining the historical event information corresponding to the current position information and the current time information by matching the current position information and the current time information with the historical event information based on a pre-established index relationship among position information, time information and historical event information.

In one optional implementation, obtaining the historical event information corresponding to the current position information and the current time information by matching the current position information and the current time information with the historical event information based on a pre-established index relationship among position information, time information and historical event information comprises:
matching the current position information and the current time information with the historical event information based on a pre-established index relationship among position information, time information and historical event information;
if the matching is not successful, performing region expansion based on the current position information so as to obtain expanded position information;
determining the corresponding historical event information based on the expanded position information and the current time information.

In one optional implementation, the determining the virtual resource object corresponding to the historical event information as the target virtual resource object comprises:
inputting the historical event information into a target model, and after the historical event information is processed by the target model, outputting the target virtual resource object; wherein the target model is obtained by training based on training samples containing the historical event information and the virtual resource object with a correspondence relationship.

According to a third aspect, the present disclosure provides a virtual resource object-based interaction apparatus, which comprises:
an obtaining module for obtaining current position information and current time information in response to a preset interaction trigger operation;
an upload module for uploading, to a target server, an interaction processing request carrying the current position information and the current time information; wherein the interaction processing request is used for requesting the target server to determine a target virtual resource object, which is a virtual resource object corresponding to historical event information determined based on the current position information and the current time information;
a first reception module for receiving the target virtual resource object sent by the target server, and executing a target interactive function based on the target virtual resource object.

According to a fourth aspect, the present disclosure provides a virtual resource object-based interaction apparatus, which comprises:
a second reception module for receiving an interaction processing request from a client; wherein the interaction processing request carries current position information and current time information;
a first determination module for determining corresponding historical event information based on the current position information and the current time information; wherein the historical event information comprises person information and/or event descriptive information of a historical event;
a second determination module for determining a virtual resource object corresponding to the historical event information as a target virtual resource object, and sending the target virtual resource object to the client.

According to a fifth aspect, the present disclosure provides a computer readable storage medium storing therein instructions which, when operated on a terminal device, cause the terminal device to implement the above-mentioned method.

According to a sixth aspect, the present disclosure provides a virtual resource object-based interaction device, comprising: a memory, a processor, and computer programs stored on the memory and operated on the processor, wherein the processor, when executing the computer programs, implements the above-mentioned method.

According to a seventh aspect, the present disclosure provides a computer program product comprising computer programs/instructions which, when executed by a processor, implement the above-mentioned method.

### BRIEF DESCRIPTION OF THE DRAWINGS

The accompanying drawings herein, which are incorporated into and constitute a part of the present specification, illustrate embodiments consistent with the present disclosure and together with the specification, serve to explain the principles of the present disclosure.

In order to explain the technical solution in the embodiments of the present disclosure or related technologies more clearly, the drawings needed in the description of the embodiments or related technologies will be briefly introduced below. Obviously, for those skilled in the art, other drawings can be obtained according to these drawings without inventive effort.
Fig. 1 is a data interaction diagram of a virtual resource object-based interaction method provided by an embodiment of the present disclosure;
Fig. 2 is a flow diagram of another virtual resource object-based interaction method provided by an embodiment of the present disclosure;
Fig. 3 is a schematic diagram of a video acquisition page provided by an embodiment of the present disclosure;
Fig. 4 is a flow diagram of a virtual resource object-based interaction method provided by an embodiment of the present disclosure;
Fig. 5 is a schematic structural diagram of a virtual resource object-based interaction apparatus provided by an embodiment of the present disclosure;
Fig. 6 is a schematic structural diagram of another virtual resource object-based interaction apparatus provided by an embodiment of the present disclosure;
Fig. 7 is a schematic structural diagram of a virtual resource object-based interaction apparatus provided by an embodiment of the present disclosure.

### DETAILED DESCRIPTION

In order to understand the above objects, features and advantages of the present disclosure more clearly, the solution of the present disclosure will be further described below. It should be noted that the embodiments of the present disclosure and the features in the embodiments can be combined with each other without conflict.

In the following description, many specific details are set forth in order to fully understand the present disclosure, but the present disclosure can also be implemented in ways other than those described herein. Obviously, the embodiments in the specification are only part of the embodiments of the present disclosure, not all of them.

Virtual resource object refers to an object created in the physical display screen or virtual space by computer 2D technology drawing or 3D modeling technology construction, which can include a person image, a person animation, a virtual person image, a virtual 2D scene, a virtual 3D scene, and etc.

With the continuous development of interaction technologies of virtual resource objects, the virtual resource object-based interactive functions are becoming more and more popular in various types of application software. Therefore, how to enrich the virtual resource object-based interactive functions so as to improve the interactive experience of users for the virtual resource objects is an urgent technical problem to be solved at present.

Therefore, an embodiment of the present disclosure provides a virtual resource object-based interaction method, including: firstly, in response to a preset interaction trigger operation, obtaining current position information and current time information; uploading, to a target server, an interaction processing request carrying the current position information and the current time information; then receiving the target virtual resource object sent by the target server, and executing a target interactive function based on the target virtual resource object. It can be seen that the embodiment of the present disclosure can obtain a virtual resource object corresponding to historical event information determined based on the current position information and the current time information, and perform interaction based on the virtual resource object, thus enriching the virtual resource object-based interactive functions and improving the interactive experience of users for the virtual resource object.

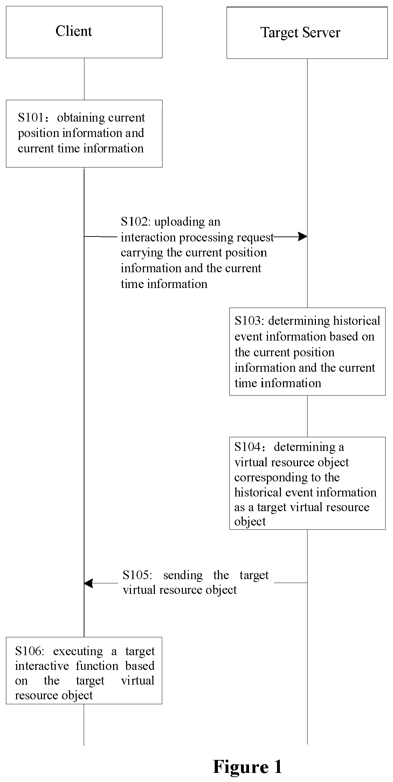

Based on this, an embodiment of the present disclosure provides a virtual resource object-based interaction method. Referring to Fig. 1, it is a data interaction diagram of a virtual resource object-based interaction method provided by an embodiment of the present disclosure.

The virtual resource object-based interaction method provided by the embodiment of the present disclosure is applied to a client and a target server respectively. The client establishes a connection with the target server through a network protocol such as Hypertext Transfer Protocol (HTTP) and can perform information interaction based on this connection. The client can be deployed on a mobile phone, a tablet computer, a desktop computer, and other devices with communication functions. The target server can be a device with storage and computing functions such as a cloud server or a server cluster.

S101: in response to a preset interaction trigger operation, the client obtains current position information and current time information.

In the embodiment of the present disclosure, the preset interaction trigger operation can include a preset interaction trigger operation acting on a preset page displayed on the client, wherein the preset interaction trigger operation can be a trigger operation for a preset control on the preset page, or a preset slide trigger operation or a preset click operation or a preset long press operation acting on the preset page, or the like.

In the embodiment of the present disclosure, the current position information can be current site information determined by the client, such as current city or town information. The current time information can be system time information acquired by a clock module of the client. It is worth noting that both the current position information and the current time information obtained by the client are obtained under the authorization of users.

S102: the client uploads, to a target server, an interaction processing request carrying the current position information and the current time information.

In the embodiment of the present disclosure, after obtaining the current position information and the current time information, the client encapsulates the current position information and the current time information in the interaction processing request, and uploads the interaction processing request to the target server as a data basis for performing interaction processing by the target server.

In the embodiment of the present disclosure, the interaction processing request is used for requesting the target server to determine a target virtual resource object, wherein the target virtual resource object is a virtual resource object corresponding to historical event information determined based on the current position information and the current time information.

S103: the target server determines corresponding historical event information based on the current position information and the current time information in the interaction processing request.

The historical event information includes person information and/or event descriptive information of a historical event.

In the embodiment of the present disclosure, after receiving the interaction processing request, the target server parses the current position information and current time information from the interaction processing request, and determines historical event information based on the current position information and the current time information.

S104: the target server determines a virtual resource object corresponding to the historical event information as a target virtual resource object.

In the embodiment of the present disclosure, after determining historical event information based on the current position information and the current time information, the target server can also determine a corresponding virtual resource object based on the historical event information.

The target server stores the pre-obtained historical event information. Specifically, the historical event information includes person information and/or event descriptive information of a historical event, in other words, the historical event information includes at least one of the person information and the event descriptive information of the historical event. The person information of the historical event can include a historical person name related to the historical event, and the event descriptive information of the historical event includes brief information of the historical event and the like.

In the embodiment of the present disclosure, the virtual resource object refers to an object created in a physical display screen or virtual space by computer 2D technology drawing or 3D modeling technology construction, and can include a virtual person image, a virtual person animation, a virtual person image, a virtual 2D scene, a virtual 3D scene, and etc., wherein the virtual person image can be a two-dimensional virtual person image or a three-dimensional virtual person image.

In the embodiment of the present disclosure, the target virtual resource object can include one or more virtual resource objects corresponding to the historical time information determined based on the current position information and the current time information of the client, and the specific determination way will be introduced in the following embodiment for the target server, which will not be repeated here.

S105: the target server sends the target virtual resource object to the client.

S106: the client executes a target interactive function based on the target virtual resource object.

In the embodiment of the present disclosure, the target interactive function can include any interactive function related to the target virtual resource object, such as a presentation function for the target virtual resource object, any application function triggered based on the presented target virtual resource object, and etc. The specific interaction way will be introduced in the following embodiment for the target server, and will not be described here.

In the embodiment of the present disclosure, the client can obtain the virtual resource object corresponding to the historical event information determined based on the current position information and the current time information, and perform interaction based on the virtual resource object, thus enriching the virtual resource object-based interactive functions and improving the interactive experience of users for the virtual resource object.

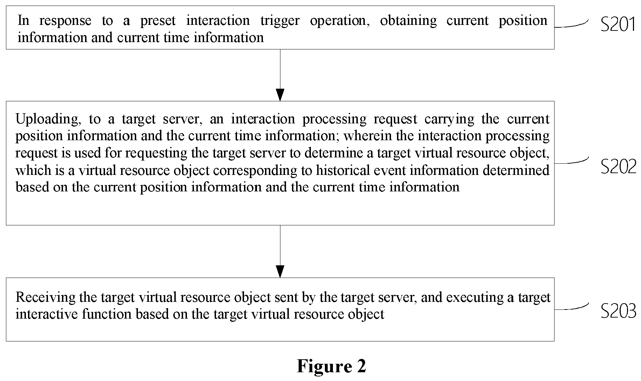

Based on the above-mentioned embodiment, an embodiment of the present disclosure provides a virtual resource object-based interaction method, which is applied to a client. Referring to Fig. 2, it is a flow diagram of a virtual resource object-based interaction method provided by an embodiment of the present disclosure, which includes:

S201: in response to a preset interaction trigger operation, obtaining current position information and current time information.

In the embodiment of the present disclosure, the preset interaction trigger operation can include a preset interaction trigger operation acting on a preset page, wherein the preset interaction trigger operation can be a trigger operation for a preset control on the preset page, or a preset slide trigger operation or a preset click operation or a preset long press operation acting on the preset page, or the like.

In one optional implementation, the preset page can be a video acquisition page, and the preset interaction trigger operation can include a preset interaction trigger operation acting on the video acquisition page. Specifically, it can be a long press operation triggered for an acquisition image on the video acquisition page, or a click operation for a preset control provided on the video acquisition page, or the like.

In another optional implementation, the preset page can be a video playback page, and the preset interaction trigger operation can include a trigger operation for an interaction control provided on the video playback page, and etc.

In yet another optional implementation, the preset page can be a tourism promotion page, etc., and the preset interaction trigger operation can include a trigger operation for an interaction control provided on the tourism promotion page, and etc.

In the embodiment of the present disclosure, when a preset interaction trigger operation is received, current position information and current time information are obtained.

The current position information of a current device, such as current city or town information, is obtained. In addition, system time information can be acquired as the current time information through a clock module of the current device.

The way to obtain the current position information and the current time information is not limited in the embodiment of the present disclosure.

S202: uploading, to a target server, an interaction processing request carrying the current position information and the current time information.

The interaction processing request is used for requesting the target server to determine a target virtual resource object, and the target virtual resource object is a virtual resource object corresponding to historical event information determined based on the current position information and the current time information.

In the embodiment of the present disclosure, the target server stores pre-acquired historical event information. Specifically, the historical event information includes person information and/or event descriptive information of a historical event, wherein the person information of the historical event can include a historical person name related to the historical event, such as the historical person name "Sima Guang" in the historical event "Sima Guang smashed the jar", the historical person name "Kong Rong" in the historical event "Kong Rong shared the pear", and the like. In addition, the event descriptive information of the historical event includes brief information of a historical event. For example, the brief information of the historical event "Kong Rong shared the pear" can include "Let us learn humility through the story of Kong Rong".

In the embodiment of the present disclosure, the target server can store an index relationship among historical event information, position information and occurrence time information, and from information in two dimensions of the above three, information in the other dimension can be indexed. For example, from the position information and the occurrence time information, the corresponding historical event information can be indexed. The position information can include the place where the historical event corresponding to the historical event information occurred, and the occurrence time information can include the time when the historical event occurred.

The target server matches the current position information and the current time information to corresponding historical event information based on the index relationship among historical event information, position information and occurrence time information. The matched historical event information can be information of a historical event that occurred locally on the same day in history.

In the embodiment of the present disclosure, a historical event information base of the target server can store an index relationship among historical event information, position information and occurrence time information, and the historical event information matching the current position information and the current time information is searched in the historical event information base of the target server. For example, assuming that the obtained current position information is "County A" and the acquired current time information is November 17th, 2022, the historical event information base stored in the server can be searched for the corresponding historical event information based on such two dimensions like the current position information "County A" and the current time information "November 17th, 2022". The specific implementation will be introduced in the following embodiment for the server, and will not be repeated here.

S203: receiving the target virtual resource object sent by the target server, and executing a target interactive function based on the target virtual resource object.

In the embodiment of the present disclosure, the client receives the target virtual resource object sent by the target server for the above-mentioned interaction processing request, and the client can trigger the target interactive function based on the target virtual resource object.

The target interactive function can include any interactive function related to the target virtual resource object, for example, it can include a presentation function for the target virtual resource object, any application function triggered based on the presented target virtual resource object, etc., which is not limited in the embodiment of the present application.

In one optional implementation, in a video playback scene, the target interactive function can include presenting the target virtual resource object on the video playback page, performing interaction based on the target virtual resource object, and other operations, thus enriching the virtual resource object-based interactive functions and improving the experience of users.

In another optional implementation, in a tourism promotion page scene, the target interactive function can include presenting the target virtual resource object on the tourism promotion page by means of a virtual 2D scene or a virtual 3D scene, so that the current user can perform interaction and other operations based on the virtual 2D scene presented on the tourism promotion page, further enriching the virtual resource object-based interactive functions and improving the interactive experience of users for the virtual resource object.

The virtual resource object-based interaction method provided by the embodiment of the present disclosure comprises: firstly, in response to a preset interaction trigger operation, obtaining current position information and current time information; uploading, to a target server, an interaction processing request carrying the current position information and the current time information; then receiving the target virtual resource object sent by the target server, and executing a target interactive function based on the target virtual resource object. It can be seen that the embodiment of the present disclosure can obtain the virtual resource object corresponding to the historical event information determined based on the current position information and the current time information, and perform interaction based on the virtual resource object, thus enriching the virtual resource object-based interactive functions and improving the interactive experience of users for the virtual resource object.

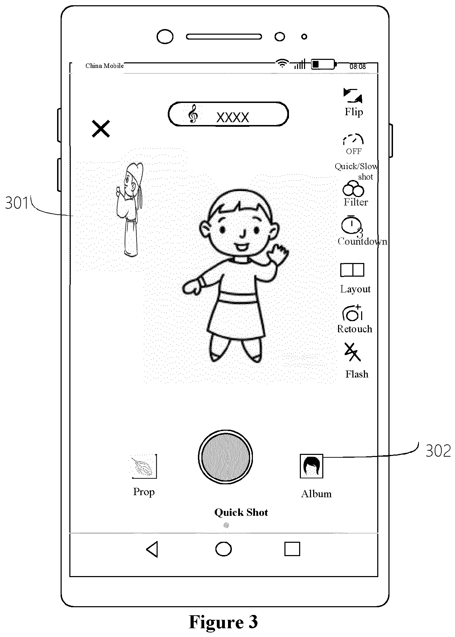

On the basis of the above-mentioned embodiment, an embodiment of the present disclosure provides a specific application scene of performing interaction based on a target virtual resource object. Referring to Fig. 3, it is a schematic diagram of a video acquisition page provided by an embodiment of the present disclosure, in which after receiving the target virtual resource object sent by the target server, the client presents the target virtual resource object 301 on the video acquisition page.

Specifically, the target virtual resource object 301 can be presented on the video acquisition page by way of shooting effects. The target virtual resource object can be at least one of a person image, a person animation and a virtual character, for example, the target virtual resource object is the historical person image "Li Bai" in historical events related to Li Bai, such as the image of "Li Bai drinking".

In the embodiment of the present disclosure, after receiving the target virtual resource object sent by the target server, the client presents the target virtual resource object on the video acquisition page, and then generates a first multimedia resource based on the target virtual resource object, thus enriching the virtual resource object-based interactive functions and improving the experience of users.

In the embodiment of the present disclosure, the target virtual resource object is presented in the first multimedia resource. In one optional implementation, the target virtual resource object can be presented on the video acquisition page by way of shooting effects, and the presented content of the first multimedia resource can be a picture, a video, or the like added with the shooting effects.

In one optional implementation, the user material in the first multimedia resource can come from a user album. Specifically, in response to a trigger operation for an album entry on the video acquisition page, the video acquisition page jumps to a user material page, and on the user material page, in response to a selection operation for a target user material among the at least one user material, the target virtual resource object is applied to the target user material to obtain the first multimedia resource.

In the embodiment of the present disclosure, the selection operation for the target user material among the at least one user material can include a click operation for the target user material, which is not limited in the embodiment of the present disclosure.

In the embodiment of the present disclosure, the user material page is used for presenting at least one user material, wherein the user material can be a video material, an image material and the like stored in a local album. When a selection operation for any one or more of the user materials is received, the selected one or more user materials are determined as the target user material, so as to apply the target virtual resource object to the target user material to obtain the first multimedia resource later.

For example, as shown in Fig. 3, when a trigger operation for an album entry 302 on the video acquisition page is received, the video acquisition page shown in Fig. 3 jumps to the user material page. On the user material page, when the selection operation for the target user material among the at least one user material is received, the target virtual resource object 301 is applied to the target user material, and then the first multimedia resource added with the image of "Li Bai drinking" is obtained.

In another optional implementation, in order to further enrich the virtual resource object-based interactive functions, the user material for generating the first multimedia resource can also be shot in real time. Specifically, in response to a shooting trigger operation acting on the video acquisition page, the first multimedia resource is shot based on the target virtual resource object.

In the embodiment of the present disclosure, the shooting trigger operation acting on the video acquisition page can include shooting the first multimedia resource based on the target virtual resource object by a start operation and an end operation acting on a shooting control of the video acquisition page in the "quick shot" mode (that is, normal shooting), and a click operation acting on the shooting control of the video acquisition page in the "segmented shooting" mode (that is, shooting the video for 15 seconds).

In practical applications, the target virtual resource object can include at least one of a person image, a person animation and a virtual person image. In order to make the first multimedia resource shot based on the target virtual resource object more vivid and interesting, in the embodiment of the present disclosure, actions of the target object are acquired, and then the first multimedia resource is obtained.

In the embodiment of the present disclosure, an action trajectory of the target object is obtained in real time by performing data capture for the actions of the target object, wherein the target object can be one or more persons who are performing any actions as presented in the shooting image.

In the embodiment of the present disclosure, when a shooting trigger operation acting on a video acquisition page is received, actions of a target object in a shooting image are acquired, and the target virtual resource object is controlled to execute the actions of the target object in the shooting image so as to obtain a first multimedia resource.

For example, assuming that the target object in the shooting image is a waving child, and the target virtual resource object is a "Santa Claus Animation". When a shooting trigger operation acting on the video acquisition page is received, the child's waving actions are acquired, and the "Santa Claus Animation" is controlled to execute the children's waving actions in the shooting image, so as to obtain the first multimedia resource presenting the "Santa Claus Animation".

In one optional implementation, the target virtual resource object can also carry preset action information, and through the shooting trigger operation acting on the video acquisition page, the target virtual resource object is controlled to perform actions according to the preset action information, so as to obtain the first multimedia resource.

In the embodiment of the present disclosure, the preset action information refers to one or more actions pre-designed for the target virtual resource object, such as a waving action, a head shaking action, and the like.

For example, assuming that the preset action information is the waving action for the target virtual resource object, when the shooting trigger operation acting on the video acquisition page is received, the target virtual resource object is controlled to perform the waving action, so as to obtain the first multimedia resource.

The virtual resource object-based interaction method provided by the embodiment of the present disclosure can realize the virtual resource object-based interactive functions by means of presenting the target virtual resource object on the video acquisition page and then generating the first multimedia resource based on the target virtual resource object. It can be seen that the embodiment of the present disclosure further enriches the virtual resource object-based interactive functions and improves the interactive experience of users for the virtual resource object.

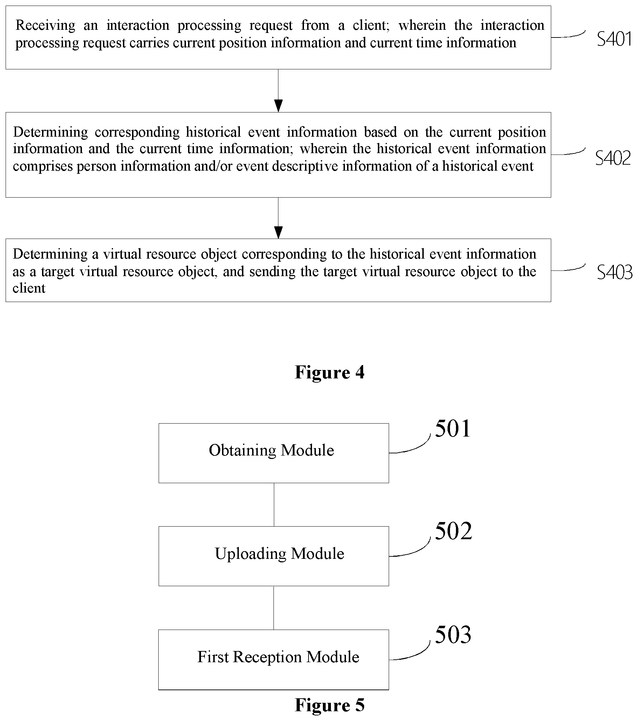

Based on the content in the above-mentioned embodiment, an embodiment of the present disclosure also provides a virtual resource object-based interaction method, which is used for a server. As shown in Fig. 4, it is a flow diagram of another virtual resource object-based interaction method provided by an embodiment of the present disclosure, and the method includes:

S401: receiving an interaction processing request from a client; wherein the interaction processing request carries current position information and current time information.

S402: determining corresponding historical event information based on the current position information and the current time information; wherein the historical event information comprises person information and/or event descriptive information of a historical event.

In the embodiment of the present disclosure, the historical event information includes person information and/or event descriptive information of a historical event, in other words, the historical event information includes at least one of the person information and the event descriptive information of the historical event, wherein the person information of the historical event can include a historical person name related to the historical event, such as the historical person name "Sima Guang" in "Sima Guang smashed the jar", and the like. In addition, the event descriptive information of the historical event includes brief information of the historical event. For example, the brief information of the historical event "Rise at cockcrow to practice the sword" can include "Encouraging everyone to make progress and study hard through the story of Rise at cockcrow to practice the sword".

In one optional implementation, when an interaction processing request from a client is received, the current position information and the current time information in the interaction processing request can be matched with the historical event information based on the pre-established index relationship among the position information, the time information and the historical event information, so as to obtain the historical event information corresponding to the current position information and the current time information.

A method of pre-establishing the index relationship can be as follows: acquiring information related to a historical event, screening out a corresponding relationship among historical event information, position information and occurrence time information, and then establishing an index relationship among historical event information, position information and occurrence time information.

For example, assuming that the interaction processing request received by the server carries current position information "County B" and current time information "November 27th", "County B" and "November 27th" can be matched with the historical event information based on the pre-established index relationship among position information, time information and historical event information, so as to obtain the historical event information corresponding to "County B" and "November 27th". This historical event information corresponds to the historical event that occurred in "County B" on "November 27th" in history.

In another optional implementation, when the current position information and the current time information are matched with the historical event information based on the pre-established index relationship among the position information, the time information and the historical event information, if the matching is not successful, region expansion can be performed based on the current position information to obtain the expanded position information, and then the corresponding historical event information can be determined based on the expanded position information and the current time information.

Specifically, firstly, the administrative region is determined based on the current position information, and the upper level administrative region corresponding to this administrative region is taken as the expanded position information. For example, assuming that the current position information is County A, the expanded position information is the upper level administrative region city B corresponding to County A, and then the corresponding historical event information is determined based on the expanded position information City B and the current time information.

S403: determining a virtual resource object corresponding to the historical event information as a target virtual resource object, and sending the target virtual resource object to the client.

In one optional implementation, a machine learning model can be used to generate the virtual resource object corresponding to historical event information.

In practical applications, historical event information is input into the target model, and after the historical event information is processed by the target model, the target virtual resource object is output.

In the embodiment of the present disclosure, the target model can be obtained by training based on training samples containing the historical event information and the virtual resource object with a correspondence relationship. Specifically, the target model is trained by taking the historical event information as the input of the training samples and the virtual resource object corresponding to the historical event information as the output of the training samples. For example, assuming that the virtual resource object corresponding to historical event information "Li Bai" is "Li Bai's person animation", the historical event information "Li Bai" and the virtual resource object "Li Bai's person animation" can be taken as a pair of training samples, and after the target model is trained based on a large number of training samples, the target model can be deployed on the target server to generate the target virtual resource object.

In practical applications, the target model can be determined based on actual requirements, which is not limited in the embodiment of the present disclosure. For example, the target model can include models such as Variational auto-encoder (VAE) and Generative Adversarial Networks (GAN).

In another optional implementation, because the target server pre-stores the index relationship among position information, occurrence time information and historical event information, the corresponding relationship between historical event information and target virtual resource object can also be pre-determined by using the target model and stored in the target server. When the interaction processing request from the client is received, the corresponding historical event information can be determined based on the current position information and the current time information. Then the target virtual resource object corresponding to the historical event information is looked up and obtained, and the target virtual resource object is sent to the client, thus further improving the experience of users.

The virtual resource object-based interaction method provided by the embodiment of the present disclosure comprises: firstly, receiving an interaction processing request from a client; determining corresponding historical event information based on current position information and current time information, then determining a virtual resource object corresponding to the historical event information as a target virtual resource object, and sending the target virtual resource object to the client. It can be seen that the embodiment of the present disclosure can determine the historical event information based on the current position information and the current time information, and then determine the corresponding target virtual resource object based on the historical event information, so as to realize the function of sending the target virtual resource object to the client, thus further enriching the virtual resource object-based interactive functions and improving the interactive experience of users for the virtual resource object.

Based on the above-mentioned method embodiment, the present disclosure also provides a virtual resource object-based interaction apparatus, which is applied to a client. Referring to Fig. 5, it is a schematic structural diagram of a virtual resource object-based interaction apparatus provided by an embodiment of the present disclosure, and the apparatus includes:
an obtaining module 501 for obtaining current position information and current time information in response to a preset interaction trigger operation;
an upload module 502 for uploading, to a target server, an interaction processing request carrying the current position information and the current time information; wherein the interaction processing request is used for requesting the target server to determine a target virtual resource object, which is a virtual resource object corresponding to the historical event information determined based on the current position information and the current time information;
a first reception module 503 for receiving the target virtual resource object sent by the target server, and executing a target interactive function based on the target virtual resource object.

In one optional implementation, the first reception module includes:
a display submodule for presenting the target virtual resource object on a video acquisition page;
a generation submodule for generating the first multimedia resource based on the target virtual resource object; wherein the target virtual resource object is presented in the first multimedia resource.

In one optional implementation, the generation submodule includes:
a jump submodule for, in response to a trigger operation for an album entry on the video acquisition page, jumping from the video acquisition page to a user material page; wherein at least one user material is presented on the user material page;
an application submodule for, in response to a selection operation for a target user material among the at least one user material, applying the target virtual resource object to the target user material to obtain the first multimedia resource.

In one optional implementation, the generation submodule includes:
a shooting submodule for, in response to a shooting trigger operation acting on the video acquisition page, shooting a first multimedia resource based on the target virtual resource object.

In one optional implementation, the target virtual resource object includes at least one of a person image, a person animation and a virtual character. The shooting submodule includes:
a first control submodule for, in response to the shooting trigger operation acting on the video acquisition page, acquiring actions of a target object in a shooting image, and controlling the target virtual resource object to execute the actions of the target object in the shooting image, so as to obtain the first multimedia resource.

In one optional implementation, the target virtual resource object carries preset action information, and the target virtual resource object includes at least one of a person image, a person animation, and a virtual character. The shooting submodule includes:
a second control submodule for, in response to the shooting trigger operation acting on the video acquisition page, controlling the target virtual resource object to execute the actions according to the preset action information, so as to obtain the first multimedia resource.

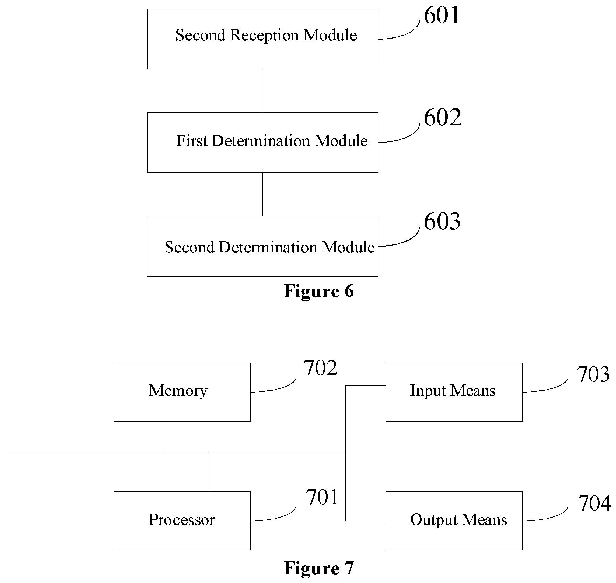

In addition, based on the above-mentioned method embodiment, the present disclosure also provides a virtual resource object-based interaction apparatus, which is applied to a target server. Referring to Fig. 6, it is a schematic structural diagram of a virtual resource object-based interaction apparatus provided by an embodiment of the present disclosure, and the apparatus includes:
a second reception module 601 for receiving an interaction processing request from a client; wherein the interaction processing request carries current position information and current time information;
a first determination module 602 for determining corresponding historical event information based on the current position information and the current time information; wherein the historical event information comprises person information and/or event descriptive information of a historical event;
a second determination module 603 for determining a virtual resource object corresponding to the historical event information as a target virtual resource object, and sending the target virtual resource object to the client.

In one optional implementation, the first determination module includes:
a first matching submodule for matching the current position information and the current time information with the historical event information based on a pre-established index relationship among position information, time information and historical event information, so as to obtain the historical event information corresponding to the current position information and the current time information.

In one optional implementation, the first matching submodule includes:
a second matching submodule for matching the current position information and the current time information with the historical event information based on a pre-established index relationship among position information, time information and historical event information;
an expansion submodule for, if the matching is not successful, performing region expansion based on the current position information so as to obtain expanded position information;
a determination submodule for determining the corresponding historical event information based on the expanded position information and the current time information.

In one optional implementation, the second determination module includes:
an output submodule for inputting the historical event information into a target model, and after the historical event information is processed by the target model, outputting the target virtual resource object; wherein the target model is obtained by training based on training samples containing the historical event information and the virtual resource object with a correspondence relationship.

In the virtual resource object-based interaction apparatus provided by the embodiment of the present disclosure, firstly, in response to a preset interaction trigger operation, obtaining current position information and current time information; uploading, to a target server, an interaction processing request carrying the current position information and the current time information; then receiving the target virtual resource object sent by the target server, and executing a target interactive function based on the target virtual resource object. It can be seen that the embodiment of the present disclosure can obtain the virtual resource object corresponding to the historical event information determined based on the current position information and the current time information, and perform interaction based on the virtual resource object, thus enriching the virtual resource object-based interactive functions and improving the interactive experience of users for the virtual resource object.

In addition to the above-mentioned method and apparatus, an embodiment of the present disclosure also provides a computer readable storage medium storing therein instructions which, when operated on a terminal device, cause the terminal device to implement the virtual resource object-based interaction method according to the embodiment of the present disclosure.

An embodiment of the present disclosure also provides a computer program product comprising computer programs/instructions which, when executed by a processor, implement the virtual resource object-based interaction method according to the embodiment of the present disclosure.

In addition, an embodiment of the present disclosure also provides a virtual resource object-based interaction device. Referring to Fig. 7, it can include:
a processor 701, a memory 702, an input means 703, and an output means 704. The processor 701 in the virtual resource object-based interaction device can include one or more processors, and one processor is taken as an example in Fig. 7. In some embodiments of the present disclosure, the processor 701, the memory 702, the input means 703 and the output means 704 can be connected by a bus or other means, wherein the connection by a bus is taken as an example in Fig. 7.

The memory 702 can be used for storing software programs and modules, and the processor 701 executes various functional applications and data processing of the virtual resource object-based interaction device by operating the software programs and modules stored in the memory 702. The memory 702 can mainly include a program storage area and a data storage area, wherein the program storage area can store an operating system, application programs required by at least one function, and the like. In addition, the memory 702 can include a highspeed random access memory, and can also include a non-volatile memory, such as at least one disk memory device, flash memory device, or other volatile solid-state memory devices. The input means 703 can be used for receiving input digital or person information and generating signal input related to user settings and function control of the virtual resource object-based interaction device.

Specifically, in the present embodiment, the processor 701 will load executable files corresponding to the processes of one or more application programs into the memory 702 according to the following instructions, and the processor 701 will operate the application programs stored in the memory 702, thus realizing various functions of the virtual resource object-based interaction device.

It should be noted that, relational terms such as "first" and "second" herein are only used to distinguish one entity or operation from another entity or operation, and do not necessarily require or imply that there is any such actual relationship or order between these entities or operations. Moreover, the terms "including", "comprising" or any other variation thereof are intended to cover non-exclusive inclusion, so that a process, method, article or device including a series of elements includes not only those elements, but also other elements not explicitly listed, or elements inherent to such process, method, article or device. Without further limitations, an element defined by the phrase "including one ..." does not exclude the existence of other identical elements in the process, method, article or device including the element.

What has been described above is only the specific implementations of the present disclosure, so that those skilled in the art can understand or implement the present disclosure. Many modifications to these embodiments will be obvious to those skilled in the art, and the general principles defined herein can be implemented in other embodiments without departing from the spirit or scope of the present disclosure. Therefore, the present disclosure will not be limited to the embodiments described herein, but is to be accorded the widest scope consistent with the principles and novel features disclosed herein.

## Claims

1. A virtual resource object-based interaction method, which comprises:
in response to a preset interaction trigger operation, obtaining (S201) current position information and current time information;
uploading (S202), to a target server, an interaction processing request carrying the current position information and the current time information; wherein the interaction processing request is used for requesting the target server to determine a target virtual resource object, which is a virtual resource object corresponding to historical event information determined based on the current position information and the current time information;
receiving (S203) the target virtual resource object sent by the target server, and executing a target interactive function based on the target virtual resource object.

2. The method according to Claim 1, wherein the executing the target interactive function based on the target virtual resource object comprises:
presenting the target virtual resource object on a video acquisition page;
generating a first multimedia resource based on the target virtual resource object; wherein the target virtual resource object is presented in the first multimedia resource.

3. The method according to Claim 2, wherein the generating the first multimedia resource based on the target virtual resource object comprises:
in response to a trigger operation for an album entry on the video acquisition page, jumping from the video acquisition page to a user material page; wherein at least one user material is presented on the user material page;
in response to a selection operation for a target user material among the at least one user material, applying the target virtual resource object to the target user material to obtain the first multimedia resource.

4. The method according to Claim 2, wherein the generating the first multimedia resource based on the target virtual resource object comprises:
shooting the first multimedia resource based on the target virtual resource object in response to a shooting trigger operation acting on the video acquisition page.

5. The method according to Claim 4, wherein the target virtual resource object comprises at least one of a person image, a person animation and a virtual character; the shooting the first multimedia resource based on the target virtual resource object in response to the shooting trigger operation acting on the video acquisition page comprises:
in response to the shooting trigger operation acting on the video acquisition page, acquiring actions of a target object in a shooting image, and controlling the target virtual resource object to execute the actions of the target object in the shooting image, so as to obtain the first multimedia resource.

6. The method according to Claim 4, wherein the target virtual resource object carries preset action information, and the target virtual resource object comprises at least one of a person image, a person animation and a virtual character; the shooting the first multimedia resource based on the target virtual resource object in response to the shooting trigger operation acting on the video acquisition page comprises:
in response to the shooting trigger operation acting on the video acquisition page, controlling the target virtual resource object to execute the actions according to the preset action information, so as to obtain the first multimedia resource.

7. A virtual resource object-based interaction method, which comprises:
receiving (S401) an interaction processing request from a client; wherein the interaction processing request carries current position information and current time information;
determining (S402) corresponding historical event information based on the current position information and the current time information; wherein the historical event information comprises person information and/or event descriptive information of a historical event;
determining (S403) a virtual resource object corresponding to the historical event information as a target virtual resource object, and sending the target virtual resource object to the client.

8. The method according to Claim 7, wherein the determining corresponding historical event information based on the current position information and the current time information comprises:
obtaining the historical event information corresponding to the current position information and the current time information by matching the current position information and the current time information with the historical event information based on a pre-established index relationship among position information, time information and historical event information.

9. The method according to Claim 8, wherein obtaining the historical event information corresponding to the current position information and the current time information by matching the current position information and the current time information with the historical event information based on the pre-established index relationship among position information, time information and historical event information comprises:
matching the current position information and the current time information with the historical event information based on the pre-established index relationship among position information, time information and historical event information;
if the matching is not successful, performing region expansion based on the current position information so as to obtain expanded position information;
determining the corresponding historical event information based on the expanded position information and the current time information.

10. The method according to Claim 7, wherein the determining the virtual resource object corresponding to the historical event information as the target virtual resource object comprises:
inputting the historical event information into a target model, and after the historical event information is processed by the target model, outputting the target virtual resource object; wherein the target model is obtained by training based on training samples containing the historical event information and the virtual resource object with a correspondence relationship.

11. A virtual resource object-based interaction apparatus, which comprises:
an obtaining module (501) for obtaining current position information and current time information in response to a preset interaction trigger operation;
an upload module (502) for uploading, to a target server, an interaction processing request carrying the current position information and the current time information; wherein the interaction processing request is used for requesting the target server to determine a target virtual resource object, which is a virtual resource object corresponding to historical event information determined based on the current position information and the current time information;
a first reception module (503) for receiving the target virtual resource object sent by the target server, and executing a target interactive function based on the target virtual resource object.

12. A virtual resource object-based interaction apparatus, which comprises:
a second reception module (601) for receiving an interaction processing request from a client; wherein the interaction processing request carries current position information and current time information;
a first determination module (602) for determining corresponding historical event information based on the current position information and the current time information; wherein the historical event information comprises person information and/or event descriptive information of a historical event;
a second determination module (603) for determining a virtual resource object corresponding to the historical event information as a target virtual resource object, and sending the target virtual resource object to the client.

13. A computer readable storage medium storing therein instructions which, when operated on a terminal device, cause the terminal device to implement the method according to any one of Claims 1 to 10.

14. A virtual resource object-based interaction device, comprising: a memory, a processor, and computer programs stored on the memory and operated on the processor, wherein the processor, when executing the computer programs, implements the method according to any one of Claims 1 to 10.

15. A computer program product comprising computer programs which, when executed by a processor, implement the method according to any one of Claims 1 to 10.
